# EUROPEAN PATENT APPLICATION

(11) **EP 1 318 668 A2**
(43) Date of publication of application: **11.06.2003**
(21) Application number: 02026605.2
(22) Date of filing: 28.11.2002
(51) Int. Cl.: H04N 5/235

(54) **A system and method for the formation of multiple exposure images**

(30) Priority: 05.12.2001 US 335796 P; 08.10.2002 US 265597
(71) Applicant: Creo IL. Ltd., 46103 Herzlia Pituah (IL)
(72) Inventor: Barkan, Stanley, 30825 D.N. Hof HaCarmel (IL); Carmi, Ilan, 53301 Givatayim (IL)
(74) Representative: Hofmann, Harald

(57) **Abstract**

An image capture apparatus creates multiple exposure images by combining raw sensor output data prior to other image processing. The apparatus consists of a sensor for capturing current raw image data and an image combiner. The image combiner forms a multiple exposure image by linearly combining stored raw image data with current raw image data from the sensor.

## Description

The present invention relates to digital photography and more particularly but not exclusively to multiple exposure digital photography.

In state-of-the-art film cameras, it is possible to expose a single frame of film several times in succession by preventing the film from advancing by mechanical means. This multiple exposure option enables the photographer to solve a number of difficulties encountered when the lighting is not optimal, besides being able to create special effects. Creating a multiple exposure photograph with a digital camera by repeatedly exposing the sensor to light has been problematic, due to noise buildup on the sensor. Digital cameras therefore do not currently offer this option. The photographer is expected to expose a sequence of images and then combine them using image-processing software such as Photoshop, available from Adobe Systems Incorporated, of San Jose, USA. An example of this combining technique is provided in an article at the following Internet website:
http://www.dpreview.com/learn/Image_Techniques/Double_Exposures_01.htm included herein as appendix A.

There are numerous cases where the combination of images is a simple sum. In these cases the use of post-capture software is not optimal. Prior to the image combination process the images are rendered to be color correct for viewing. The pixel values are then not linearly proportional to the original light.

Suppose an image has been rendered, yielding the following non-linear transformation of the pixel intensity levels.

| **Input level** | **Output level** |
|---|---|
| **0** | 0 |
| **10** | 25 |
| 20 | 40 |
| 30 | 70 |
| 40 | 100 |

Doubling output levels of (0, 10, 20) after rendering yields the result (0,50,80). However if the uncorrected input values are first doubled and then transformed, the original levels of (0,10,20) yield the result (0,40,100). Since the goal is to add the input values (equivalent to a longer exposure time), it is clear that the non-linear transformation has introduced a distortion of the intensity levels. With a limited number of bits, reversing the non-linear transformation of the data prior to addition causes a loss in accuracy.

One typical use of the multiple exposure technique is when images are combined to achieve depth of field. In this case, the photographer wishes to keep the aperture at minimal size and the flash equipment is not powerful enough to provide correct exposure. It is possible in this case to increase the exposure time and to program the flash to fire several times. However, this requires expensive equipment. Also, during the flash recovery time, noise may build up while no information is added. Another example where it is critical to add light in linear fashion is when the scene is lit simultaneously from indoors and from outdoors, for example when there is a window in the image. In this case it is customary to shoot several images by repeated exposure of a single frame: with the window open, with the window closed, and with and without flash. In the analog case, all the images are thus linearly added on to the single multiply exposed frame. However, in the digital case, combining such differently lit images using image-processing software after they have been captured digitally and rendered to a viewing space, cannot be done in a linear fashion for the reasons mentioned above. The transformations performed on the image are nonlinear and irreversible. Likewise, adding the images directly on the sensor is not possible due to noise considerations, as mentioned above.

Image combination has been proposed to alleviate the problem of the limited dynamic range of digital camera image sensors. In high contrast scenes, the dynamic range of the camera sensor is often not adequate to provide detail for both dark and light portions of the image, even using a charge-coupled device (CCD) sensor. In U.S. Pat. 6,177.958 to Anderson, after a high contrast scene is detected, the image is captured twice, at different exposures. The bright image and the dark image are then combined to increase image dynamic range. A number of methods for combining the two images are described. These methods include: (1) determining an offset to achieve spatial alignment and aligning the images on a pixel-by-pixel basis, (2) determining common areas of the two images and adjusting the exposure overlapping areas so that the common areas are equal in brightness, (3) selecting pixels form the dark image where the pixels are below the darkest area of the exposure overlapped area, or (4) selecting pixels from the light image where the pixel is above the brightest area of the exposure overlapped area. In all cases the bright and dark images are combined non-linearly, under the assumption that the images being combined are of essentially the same scene. . Similar solutions are presented in U.S. Patents 6,011,251 to Dierickx, et al., 5,247,366 to Ginosar, et al., 5,144,442 to Hilsenrath, et al., and 4,647,975 to Alston, et al. Additional solutions are found in World IPO 0,113,171 to Crawford, et al., and European Patents 0,982,983 to Inagaki, et al., and 0,910,209 to Yoneyama, et al. These patents disclose various methods of increasing image dynamic range, by combining images of a scene, generally taken at significantly different exposures, in such a way as to enhance the darkest and brightest components of the image. Documents referred to above are hereby incorporated by reference.

Current analog cameras, which do offer multiple exposure features, do not compute the correct number of frames to be taken to arrive at the correct exposure. The photographer must measure the light that is obtained from a single exposure and compute the number of frames required for correct exposure at the desired aperture setting. If the flash strength is not consistent, this number may not be exactly predictable. Furthermore, camera settings, such as aperture or exposure time, are not always controllable when the camera is in multiple exposure mode.

It is a first object of the present embodiments to provide a multiple exposure feature for digital cameras, which combines multiple images linearly.

It is a further object of the present embodiments to provide a digital camera in which the multiple exposure process can be controlled, either manually or automatically, so as to easily obtain the combination of images required for correct exposure.

More generally, it is an object of the present embodiments to provide a camera that is able to monitor actual accumulated light over a series of exposures, so as to be able to terminate the multiple exposure process when optimal overall light levels have been obtained.

According to a first aspect of the present invention there is thus provided an image capture apparatus for the formation of a multiple exposure image, comprising:
an image capture sensor for capturing images, and
a linear image combiner, associated with said image capture sensor, for linearly combining raw image capture data from said sensor, thereby to form said multiple exposure image.

The apparatus may comprise a buffer memory at said sensor output for storing said raw image data, said buffer memory being operatively associated with said linear image combiner to allow said image combiner access to said raw image data.

Preferably, said linear image combiner is further operable to store said multiple exposure image in said buffer memory.

Preferably, said apparatus comprises a digital camera.

Preferably, said linear image combiner is operable to form said multiple exposure image as a linear combination of stored raw image data and a current raw image data capture.

Preferably, said linear combination is one of a group comprising: a linear fraction of a sum of said stored raw image data and said current raw image data capture, an average of said stored raw image data and said current raw image data capture, and a sum of said stored raw image data and a linear fraction of said current raw image data capture.

Preferably, said linear image combiner is controllable by a user.

Preferably, said linear image combiner is operable to combine said raw image data automatically, so as to satisfy a predetermined exposure criterion for said multiple exposure image.

Preferably, said criterion comprises having a pixel intensity level within a segment of said multiple exposure image exceed a predetermined threshold. Preferably, said linear image combiner is operable to form said multiple exposure image from more than one image stored in said buffer memory.

The apparatus may comprise a controller, for controlling apparatus functions. Preferably, said controller is operable to control said functions in accordance with information obtained from said image combiner.

Preferably, one of said functions comprises activating and deactivating a multiple exposure mode.

Preferably, one of said functions comprises selecting a segment of an image.

Preferably, one of said functions comprises selecting and deselecting an automatic multiple exposure mode.

Preferably, one of said functions comprises capturing an image.

Preferably, said apparatus comprises a digital camera and one of said functions comprises controlling camera settings.

Preferably, said settings comprise camera aperture, camera speed, and flash operation.

The apparatus may comprise a converter, for converting current raw image data into a digitized image.

Preferably, said buffer memory comprises a random access memory (RAM). The apparatus may comprise a display.

Preferably, said display is operable to display a selected image.

Preferably, said selected image is one of a group comprising: a current image, said multiple exposure image, and an image stored in said buffer memory. Preferably, said display is operable to display a histogram for a selected image. Preferably, said histogram indicates the relative distribution of light intensities for said selected image.

Preferably, said histogram indicates a current state of exposure of said selected image.

Preferably, said selected image is one of a group comprising: a current image, said multiple exposure image, and an image from buffer memory.

The apparatus may comprise a pointer, for selecting a segment of a displayed image.

Preferably, said sensor comprises a charge-coupled device (CCD) sensor. Preferably, said sensor comprises a complementary metal oxide semiconductor (CMOS) sensor.

The apparatus may comprise an image processor for processing raw image data.

Preferably, said processing comprises rendering said raw image data into a viewable image.

The apparatus may comprise a main memory for storing said processed image data.

According to a second aspect of the present invention there is preferably provided a method for creating multiple exposure images by linearly combining raw capture data from a sensor, comprising:
obtaining current raw image data;
storing said current raw image data in memory; and
performing a multiple exposure iteration step by:
   obtaining new current raw image data;
   linearly combining stored raw image data with said current raw image data to form a multiple exposure image; and
   storing said multiple exposure image in said memory.

Preferably, said multiple exposure iteration step further comprises the steps of:
determining if said multiple exposure image is correctly exposed;
if said multiple exposure image is correctly exposed, discontinuing said multiple exposure process; and
if said multiple exposure image is not correctly exposed, performing a further multiple exposure iteration step.

Preferably, said stored raw image data comprises more than one image stored in said memory.

Preferably, said method is performed by a digital camera.

The method may comprise adjusting camera settings.

Preferably, said multiple exposure iteration step further comprises adjusting camera settings.

The method may comprise adjusting said camera settings automatically. Preferably, said multiple exposure iteration step further comprises adjusting said camera settings automatically.

Preferably, said multiple exposure iteration step further comprises displaying a selected image.

Preferably, said selected image is one of a group comprising: a current image, said multiple exposure image, and an image stored in said memory.

Preferably, said multiple exposure iteration step further comprises selecting at least one segment of said displayed image.

The method may comprise analyzing said selected segments to determine image exposure.

Preferably, said multiple exposure iteration step further comprises displaying a histogram of a selected image.

Preferably, said selected image is one of a group comprising: a current image, said multiple exposure image, and an image stored in said memory.

Preferably, analyzing said histogram to determine image exposure.

Preferably, said histogram indicates the relative distribution of light intensities for said selected image.

Preferably, said histogram indicates a current state of exposure of said selected image.

The method may comprise selecting a manner of combining said images. Preferably, said images are combined automatically according to said selected manner.

The method may comprise selecting a criterion for determining if said multiple exposure image is correctly exposed.

Preferably, said criterion comprises having a pixel intensity level within a segment of said multiple exposure image exceed a predetermined threshold. Preferably, said memory comprises a RAM.

The method may comprise digitizing said current raw image data.

According to a third aspect of the present invention there is provided an image capture apparatus comprising a sensor for capturing raw image data, an image buffer for storing said captured raw image data, an image processor for processing said captured data into a displayable image file and a memory for storing said image file, the apparatus further comprising an image combiner associated with said image buffer for performing linear combinations between different captures of said raw image data, therefrom to form multiple exposure images.

Preferably, said image combiner is operable to continue to accumulate combinations using succeeding image captures until a predetermined light level is reached within said combination.

For a better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Figure 1 shows a simplified block diagram of an image capture apparatus for the formation of a multiple exposure image according to a preferred embodiment of the present invention.
Figure 2 shows a simplified block diagram of an image capture apparatus for the formation of a multiple exposure image according to a further preferred embodiment of the present invention.
Figure 3 is a simplified flowchart of a method for creating multiple exposure images.
Figure 4 is a simplified flowchart of a manual operation mode for creating multiple exposure images.
Figure 5 is a simplified flowchart of an automatic operation mode for creating multiple exposure images.

Multiple exposure is a well-known photography technique. In film cameras the technique is achieved by photographing images without advancing the film between photographs. The result is a linear sum of the photographed images. In digital photography the effect is obtained by using image processing software to display and combine previously photographed images, which have been rendered for viewing. Because the processing is carried out on the rendered image, the pixel brightness levels are no longer proportional to the input light. Thus combining at the post-rendering stage introduces non-linear effects into the combined image. In the camera itself, the sensor captures an undistorted image, the undistorted or raw image is flushed to a raw image buffer, and from the image buffer the raw image is rendered for viewing on a screen and formatted for storage as an image file. Combining the photographed images after storage ordinarily would not help because the stored image file is rendered.

One possible technique for creating multiple exposures in a digital camera is to re-expose the camera sensor to light without flushing the sensor. Re-exposing the sensor creates a linearly summed image as desired. However, unlike in a film camera, the resultant digital image is degraded by accumulated noise on the sensor. Additionally, the process is relatively inflexible. For example, the resultant image cannot be formed as an average of the photographed images.

However, the problem may be overcome by retaining the raw image in the image buffer and adding subsequent output from the sensor directly to the raw image in the image buffer.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

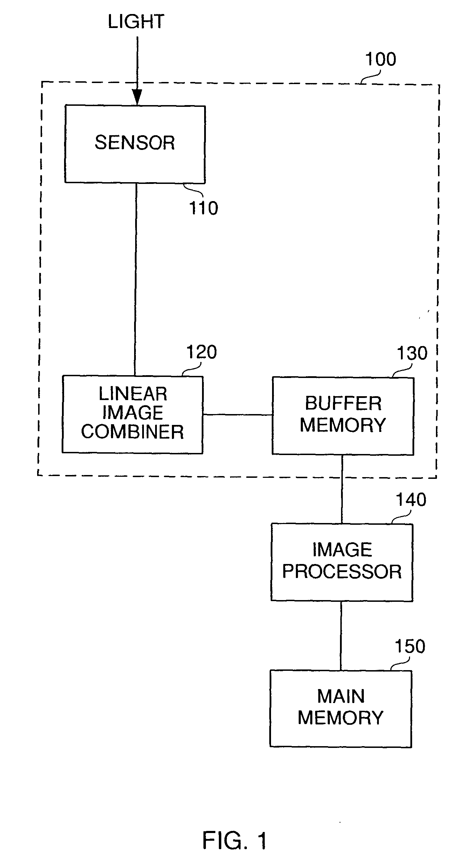

Reference is now made to Figure 1, which shows a simplified block diagram of an image capture apparatus 100, which creates multiple exposure images from raw capture data from a sensor. The image capture apparatus 100 consists of an image capture sensor 110 and linear image combiner 120. Light impinging on sensor 110 is captured to form current raw image data. In the following description, the term raw image data refers to image data as flushed from the sensor and which has not undergone significant nonlinear processing, for example for storage, viewing, or like purposes. The possibility of having carried out digitization or equalization procedures is not excluded. Linear image combiner 120 combines the raw image data from the sensor linearly, to form a multiple exposure image. In the preferred embodiment apparatus 100 is a digital camera, which generally contains a CCD or CMOS sensor.

The image capture apparatus 100 enables a user to start and stop accumulating image data with complete freedom. During the time the accumulation is stopped, the user can make any desired changes to the scene being captured, or to camera settings; exposure settings can be changed, a flash unit can be adjusted, and so forth.

In a first preferred embodiment the image capture apparatus 100 also contains a buffer memory 130 (also referred to as image buffer). Buffer memory 130 stores image data as it is flushed from the sensor 110. Additionally, buffer memory 130 may store combined image data obtained from linear image combiner 120. All or a portion of the image data stored in buffer memory 130 is available for processing by the linear image combiner 120. Buffer memory 130 may be a random access memory (RAM). Linear image combiner 120 creates the multiple exposure image by linearly combining image data from the buffer memory 130 with current image data obtained from the sensor 110, or with other image data from the buffer memory 130. When the desired multiple exposure image is achieved, the image may be transferred from the image buffer to another section of the buffer memory 130, or rendered into a viewable image and stored in main memory 150 as described below.

In the preferred embodiment, the apparatus further consists of an image processor 140, which processes the raw image data. For example, the image processor 140 may convert the raw image data into a viewable image format, such as Joint Photographic Experts Group (JPEG). The apparatus may further include a main memory 150, which stores viewable images after processing.

Since the linear image combiner 120 operates on the raw data taken from the sensor and stored in the buffer memory 130, nonlinearities are not introduced during the image combination process. Additionally, the linear image combiner 120 has significant flexibility for combining the images. For example, the current raw image data and image data from the image buffer may be summed, averaged, or combined in other linear proportions. If desired, rather than adding, the pixels may be averaged together. Images previously stored in buffer memory 130 may also be added. Controlled non-linear effects may later be added, if desired. This flexibility is useful when the reason for forming a multiple image is something other than for providing correct exposure levels. For example, when it is desired to introduce special effects.

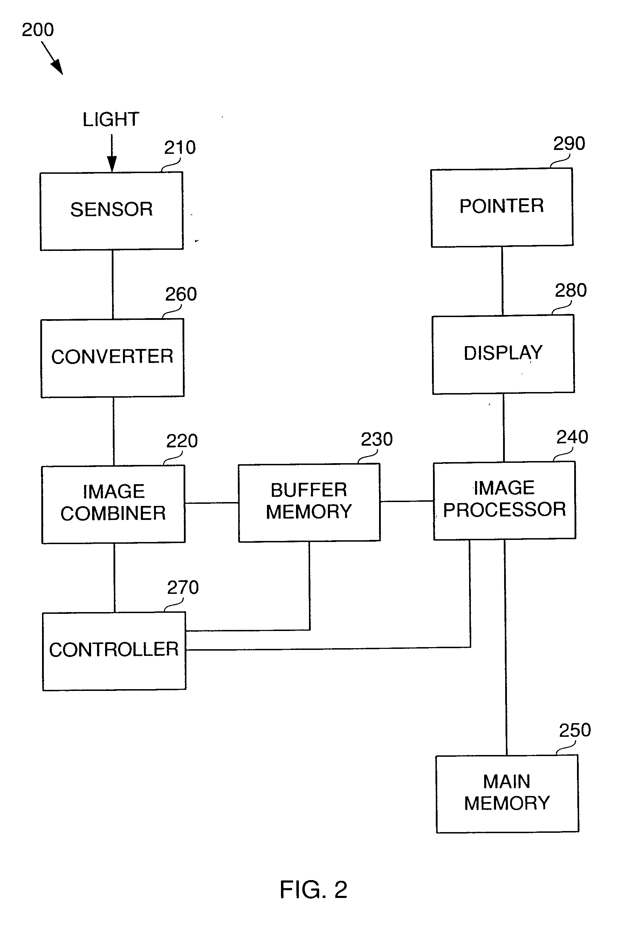

Reference is now made to Figure 2, which is a simplified block diagram of a further preferred embodiment of an image capture apparatus 200, such as a digital camera. Image capture apparatus 200 consists of sensor 210, buffer memory 230, and linear image combiner 220, as discussed above. In the preferred embodiment image capture apparatus 200 further consists of, separately or in combination, converter 260, controller 270, display 280, and pointer 290.

In the preferred embodiment, converter 260 converts sensor data to a format required by buffer memory 230 and/or combiner 220. Converter 260 may function as an analog to digital converter, converting analog sensor data to digital data. In the preferred embodiment, linear image combiner 220 combines the digitized current and stored images, after data converter 260 has performed analog to digital conversion of the sensor data.

In the preferred embodiment, image capture apparatus 200 contains controller 270, which controls various apparatus functions. Camera functions, which may be controlled by controller 270 and are relevant to the present invention, include: activating and deactivating multiple exposure mode, adjusting camera settings, and taking photographs. Additionally, the controller 270 may select segments of the multiple exposure image, and analyze them to determine whether the required exposure criterion has been met. Several examples of exposure criteria are described below. If an additional image is required, the controller 270 may calculate the required exposure, set the camera to the required exposure, and take another image, which is then added to the previous image by the linear image combiner 220. The controller 270 may control the camera functions based on information received from linear image combiner 220, in order to obtain the desired multiple exposure image.

Linear image combiner 220 may be controlled by a user, or automatically by controller 270. Various exposure criteria may be used by controller 270 as the exposure criterion. For example, additional images may be added to the multiple exposure image until the pixel intensity of the combined image or a section of the combined image reaches a specified exposure threshold. The specified segment may be required to have the highest detailed brightness, or the average of a shadow area in the image may be required to attain a minimum predetermined value. If the multiple exposure image is below correct exposure and an additional image will surpass correct exposure, the user or controller may take another image or the controller may automatically shoot an additional image. Linear image combiner 220 may then add a linear fraction of the image to the multiple exposure image, so that the resulting image reaches the exact required exposure.

In the preferred embodiment, image capture apparatus 200 also provides a display 280. The display 280 provides a user with a view of one or more selected images and/or a histogram providing information about the selected images. In the preferred embodiment the histogram displays the relative distribution of light intensity (i.e. the number of pixels at varying intensity levels) and/or the exposure status. The histogram indicates the intensity levels at which large numbers of pixels are clustered. The indicated intensity levels can be used to select an exposure threshold. The user can use the display to display the current image, the multiple exposure image, or an image from the memory. In the preferred embodiment, image capture apparatus 200 further contains a pointer 290, for user interaction with the camera. The user may use the pointer to select one or more segments of the image, or to select histogram data.

The user may use the display to control the combination of images which form the multiple exposure image. For example, the user can select a section of the combined image which should have the highest detailed brightness. Image capture apparatus 200 then continues to take images automatically, comparing the pixel average in the area pointed at by the user to an overexposure threshold after each image is taken. The camera stops taking pictures as soon as the threshold is exceeded. In an alternate preferred embodiment, the controller 270 automatically selects the area of the image where correct exposure is to be measured, for example by selecting the brightest pixel in the image or some area of pixels that are slightly below the brightest value. This may be achieved by using the average brightness over an area of the image. As an alternative way of automatic selection, instead of looking at actual pixel brightness levels, the threshold may be compared to the intensity level of a selected proportion of pixels within the image (or selected segment of the image), for example the brightest ten percent of the image pixels.

In state-of-the-art digital cameras the camera may comprise a camera body connected to (or communicating with) a digital camera back. In the preferred embodiment, the camera front contains the optical elements such as the camera lens, whereas the camera back contains the sensor, camera controls for setting the camera operating modes and for influencing the computation processes, the camera controller for performing the necessary computations for creating multiple exposure images, and the camera display for displaying images or image histograms. Alternately, the camera may be connected to, and controlled by, a computer which performs the necessary display and/or analysis functions.

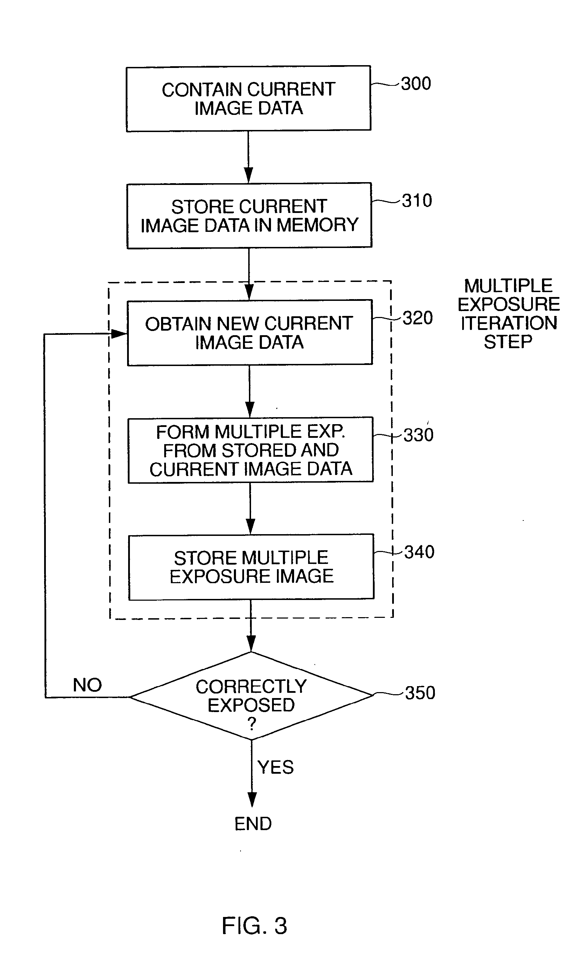

Reference is now made to Figure 3, which is a simplified flowchart of a preferred embodiment of a method for creating multiple exposure images by combining photographed images within camera memory. In step 300, a picture is taken to obtain current image data. The current image data is stored in memory in step 310. Images may be converted to digital format prior to storage in memory. One or more multiple exposure iteration steps are next performed, to combine the stored image with additional images.

A multiple exposure iteration step consists of steps 320-340, and is performed as follows. In step 320 new image data is obtained by taking another image, and updating the current image data. Stored image data is combined linearly with the current new image data in step 330, thereby forming a multiple exposure image. The stored image data may consist of a previously generated multiple exposure image (for example, the multiple exposure image generated during the previous iteration), or a previously photographed single image. The resultant multiple exposure image is stored in memory in step 340.

In the preferred embodiment the multiple exposure iteration step further contains step 350, in which the multiple exposure image is examined to determine if the exposure criteria have been attained. Various exposure criteria may be selected, as discussed above. If the multiple exposure image is correctly exposed, the multiple exposure process is ended. If the multiple exposure image is not correctly exposed, another multiple exposure iteration step is performed. Adding step 350 to the multiple exposure iteration step converts the multiple exposure creation method into an iterative procedure.

The preferred embodiment contains the further step of selecting a manner of combining the image data. The multiple exposure image is generated as a linear combination of the current image data and previously generated image data, for example by summing or averaging the multiple exposure image of the previous iteration with the current image data, as described above.

In the preferred embodiment camera settings may be adjusted, either manually or automatically, prior to taking an image. In a further preferred embodiment, a selected image or information about an image is displayed. The user may use the display to check the multiple exposure image, and to select sections of the image.

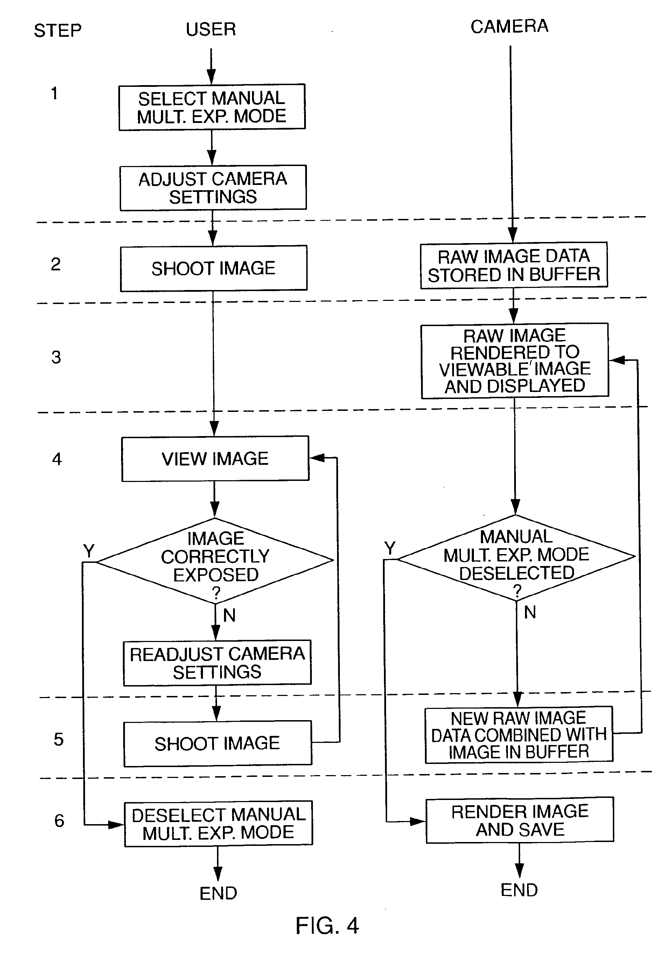

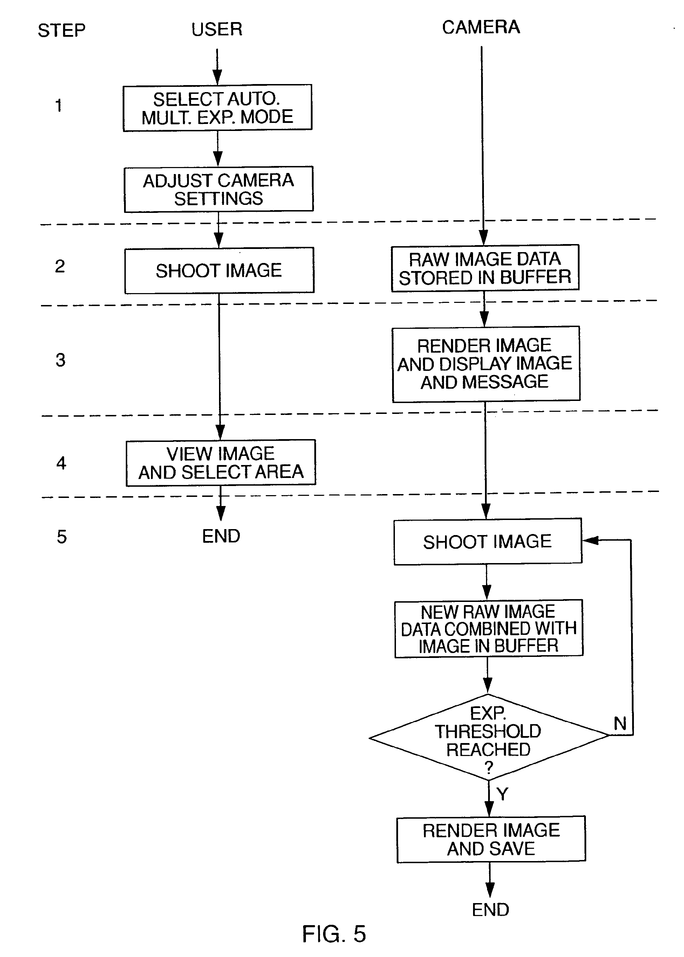

The abovedescribed embodiments may be combined within a digital camera to permit flexible camera modes of operation. Two examples of operating modes for creating multiple exposure images are described below. Figures 4 and 5 are flowcharts, for the manual and automatic exposure modes respectively, illustrating user and camera actions during each step.

### Manual exposure mode

1) The user selects the option for manual multiple exposures. The user sets the camera front to a desired aperture and speed, and sets the flash equipment, if present, to the desired settings. If the image is to be the same in each exposure, the user ensures that the camera and back will be absolutely stable during a sequence of images.
2) The user presses the Shoot button on the camera or the camera back. A single regular exposure is taken. The raw image resulting from this exposure is stored in an image buffer in a random access memory in the back.
3) The image is rendered to a viewable image that is displayed on the back or on an attached monitor. The histogram of light levels in the raw image is also computed and displayed.
4) The user observes the image, the histogram, or both, and judges whether it is necessary to add an additional exposure to the current image. The user may change a setting affecting the exposure, such as the speed, aperture, flash strength, or any other camera or lighting control. The histogram display may also indicate the current state of exposure of the image.
5) The user presses **Shoot** again. Whereas in the single exposure case the image in the image buffer is generally flushed for rendering and replaced by a new image, in the multiple exposure case the image is not flushed from the buffer. Instead, each pixel of the incoming new image is added to the existing raw value at that pixel location in the image buffer, thus creating a multiple exposure image in the buffer.
6) The user continues with steps 3, 4, and 5 until satisfied that a correctly exposed image has been attained. The user then deselects the option for multiple manual exposures. The cumulative image is taken from the image buffer, rendered or otherwise processed, and saved in camera memory in a similar manner to a single exposure image.

### Automatic exposure mode

1) The user selects the option for automatic multiple exposures. The user sets the camera body to a desired aperture and speed, and sets the flash equipment, if present, to the desired settings. If the image is to be the same in each exposure, the user ensures that the camera and back will be absolutely stable during a sequence of images.
2) The user presses the **Shoot** button on the camera or the camera back. A single regular exposure is taken. The raw image resulting from this exposure is stored in an image buffer in a random access memory in the back.
3) The image is rendered to a viewable image that is displayed on the back or on an attached monitor. The histogram of light levels in the raw image is also computed and displayed. The back displays a message requiring the user to interact with it.
4) The user observes the image and points at an area on the display image that should obtain the highest detailed brightness, i.e. all brighter pixels will be overexposed. The back resumes functioning.
5) The back continues to shoot a sequence of images, and to add each image to the cumulative image as described in above step 5 of the manual exposure mode. After each image, the image combiner examines the pixel average in the area pointed to by the user. If the average is less than a predetermined overexposure threshold, and addition of an identical subsequent image will not pass the threshold, an additional image is shot and added to the cumulative image in the buffer. If the overexposure threshold has been reached, the shooting loop is terminated, and the cumulative multiple exposure image is transferred from the image buffer to camera memory.

Multiple exposure photography is a powerful tool for both professional and amateur photographers. The digital camera described above provides photographers with a simple and accurate way of forming multiple exposure images. The images may be formed directly within the camera, with no need for further processing. Undesired nonlinearities are not introduced, and the image combination process may be controlled simply and precisely.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

All publications, patent applications, patents, and other references mentioned herein are incorporated by reference in their entirety. In case of conflict, the patent specification, including definitions, will prevail. In addition, the materials, methods, and examples are illustrative only and not intended to be limiting.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

## Claims

1. Image capture apparatus for the formation of a multiple exposure image, comprising:
an image capture sensor for capturing images, and
a linear image combiner, associated with said image capture sensor, for linearly combining raw image capture data from said sensor, thereby to form said multiple exposure image.

2. Image capture apparatus according to claim 1, further comprising a buffer memory at said sensor output for storing said raw image data, said buffer memory being operatively associated with said linear image combiner to allow said image combiner access to said raw image data.

3. Image capture apparatus according to claim 2, wherein said linear image combiner is further operable to store said multiple exposure image in said buffer memory.

4. Image capture apparatus according to claim 1, 2, or 3, being a digital camera.

5. Image capture apparatus according to any preceding claim, wherein said linear image combiner is operable to form said multiple exposure image as a linear combination of stored raw image data and a current raw image data capture.

6. Image capture apparatus according to claim 5, wherein said linear combination is one of a group comprising: a linear fraction of a sum of said stored raw image data and said current raw image data capture, an average of said stored raw image data and said current raw image data capture, and a sum of said stored raw image data and a linear fraction of said current raw image data capture.

7. Image capture apparatus according to any preceding claim, wherein said linear image combiner is controllable by a user.

8. Image capture apparatus according to any preceding claim, wherein said linear image combiner is operable to combine said raw image data automatically, so as to satisfy a predetermined exposure criterion for said multiple exposure image.

9. Image capture apparatus according to claim 8, wherein said criterion comprises having a pixel intensity level within a segment of said multiple exposure image exceed a predetermined threshold.

10. Image capture apparatus according to claim 2, wherein said linear image combiner is operable to form said multiple exposure image from more than one image stored in said buffer memory.

11. Image capture apparatus according to any preceding claim, further comprising a controller, for controlling apparatus functions.

12. Image capture apparatus according to claim 11, wherein said controller is operable to control said functions in accordance with information obtained from said image combiner.

13. Image capture apparatus according to claim 11, wherein one of said functions comprises activating and deactivating a multiple exposure mode.

14. Image capture apparatus according to claim 11, wherein one of said functions comprises selecting a segment of an image.

15. Image capture apparatus according to claim 11, wherein one of said functions comprises selecting and deselecting an automatic multiple exposure mode.

16. Image capture apparatus according to claim 11, wherein one of said functions comprises capturing an image.

17. Image capture apparatus according to claim 11, wherein said apparatus is a digital camera and one of said functions comprises controlling camera settings.

18. Image capture apparatus according to claim 17, wherein said settings comprise camera aperture, camera speed, and flash operation.

19. Image capture apparatus according to any preceding claim, further comprising a converter, for converting current raw image data into a digitized image.

20. Image capture apparatus according to claim 2, wherein said buffer memory comprises a random access memory (RAM).

21. Image capture apparatus according to any preceding claim, further comprising a display.

22. Image capture apparatus according to claim 21, wherein said display is operable to display a selected image.

23. Image capture apparatus according to claim 22, wherein said selected image is one of a group comprising: a current image, said multiple exposure image, and an image stored in said buffer memory.

24. Image capture apparatus according to claim 21, wherein said display is operable to display a histogram for a selected image.

25. Image capture apparatus according to claim 24, wherein said histogram indicates the relative distribution of light intensities for said selected image.

26. Image capture apparatus according to claim 24, wherein said histogram indicates a current state of exposure of said selected image.

27. Image capture apparatus according to claim 24, wherein said selected image is one of a group comprising: a current image, said multiple exposure image, and an image from buffer memory.

28. Image capture apparatus according to claim 21, further comprising a pointer, for selecting a segment of a displayed image.

29. Image capture apparatus according to any preceding claim, wherein said sensor comprises a charge-coupled device (CCD) sensor.

30. Image capture apparatus according to any preceding claim, wherein said sensor comprises a complementary metal oxide semiconductor (CMOS) sensor.

31. Image capture apparatus according to any preceding claim, further comprising an image processor for processing raw image data.

32. Image capture apparatus according to claim 31, wherein said processing comprises rendering said raw image data into a viewable image.

33. Image capture apparatus according to claim 31, further comprising a main memory for storing said processed image data.

34. A method for creating multiple exposure images by linearly combining raw capture data from a sensor, comprising:
obtaining current raw image data;
storing said current raw image data in memory; and
performing a multiple exposure iteration step comprising:
obtaining new current raw image data;
linearly combining stored raw image data with said current raw image data to form a multiple exposure image; and
storing said multiple exposure image in said memory.

35. A method for creating multiple exposure images according to claim 34, wherein said multiple exposure iteration step further comprises the steps of:
determining if said multiple exposure image is correctly exposed;
if said multiple exposure image is correctly exposed, discontinuing said multiple exposure process; and
if said multiple exposure image is not correctly exposed, performing a further multiple exposure iteration step.

36. A method for creating multiple exposure images according to claim 34 or claim 35, wherein said stored raw image data comprises more than one image stored in said memory.

37. A method for creating multiple exposure images according to claim 34, 35 or 36, wherein said method is performed by a digital camera.

38. A method for creating multiple exposure images according to claim 37, further comprising adjusting camera settings.

39. A method for creating multiple exposure images according to claim 37, wherein said multiple exposure iteration step further comprises adjusting camera settings.

40. A method for creating multiple exposure images according to claim 38, further comprising adjusting said camera settings automatically.

41. A method for creating multiple exposure images according to claim 38, wherein said multiple exposure iteration step further comprises adjusting said camera settings automatically.

42. A method for creating multiple exposure images according to any one of claims 34 to 41, wherein said multiple exposure iteration step further comprises displaying a selected image.

43. A method for creating multiple exposure images according to claim 42, wherein said selected image is one of a group comprising: a current image, said multiple exposure image, and an image stored in said memory.

44. A method for creating multiple exposure images according to claim 42, wherein said multiple exposure iteration step further comprises selecting at least one segment of said displayed image.

45. A method for creating multiple exposure images according to claim 44, further comprising analyzing said selected segments to determine image exposure.

46. A method for creating multiple exposure images according to any one of claims 34 to 45, wherein said multiple exposure iteration step further comprises displaying a histogram of a selected image.

47. A method for creating multiple exposure images according to claim 46, wherein said selected image is one of a group comprising: a current image, said multiple exposure image, and an image stored in said memory.

48. A method for creating multiple exposure images according to claim 46, further comprising analyzing said histogram to determine image exposure.

49. A method for creating multiple exposure images according to claim 46, wherein said histogram indicates the relative distribution of light intensities for said selected image.

50. A method for creating multiple exposure images according to claim 46, wherein said histogram indicates a current state of exposure of said selected image.

51. A method for creating multiple exposure images according to any one of claims 34 to 50, further comprising selecting a manner of combining said images.

52. A method for creating multiple exposure images according to claim 51, wherein said images are combined automatically according to said selected manner.

53. A method for creating multiple exposure images according to any one of claims 34 to 52, further comprising selecting a criterion for determining if said multiple exposure image is correctly exposed.

54. A method for creating multiple exposure images according to claim 53, wherein said criterion comprises having a pixel intensity level within a segment of said multiple exposure image exceed a predetermined threshold.

55. A method for creating multiple exposure images according to claim any one of claims 34 to 54, wherein said memory comprises a RAM.

56. A method for creating multiple exposure images according to any one of claims 34 to 55, further comprising digitizing said current raw image data.

57. Image capture apparatus comprising a sensor for capturing raw image data, an image buffer for storing said captured raw image data, an image processor for processing said captured data into a displayable image file and a memory for storing said image file, the apparatus further comprising an image combiner associated with said image buffer for performing linear combinations between different captures of said raw image data, therefrom to form multiple exposure images.

58. The image capture apparatus of claim 57, wherein said image combiner is operable to continue to accumulate combinations using succeeding image captures until a predetermined light level is reached within said combination.
